# FASCICULE DE BREVET EUROPEEN

(11) **EP 1 274 205 B1**
(45) Date de publication et mention de la délivrance du brevet: **13.09.2006**
(21) Numéro de dépôt: 02291340.4
(22) Date de dépôt: 31.05.2002
(51) Int. Cl.: H04L 12/56

(54) **Unité de commutation d'un réseau de transmission par paquets**
Schalteinheit eines Paketübertragungsnetzwerk
Switching unit of a packet transmission network

(30) Priorité: 12.06.2001 FR 0107766
(43) Date de publication de la demande: 08.01.2003
(73) Titulaire: France Telecom S.A., 75015 Paris (FR)
(72) Inventeur: Quinquis, Jean-Paul, 22700 Perros-Guirec (FR); Roussel, Olivier, 22700 Perros-Guirec (FR); Cochennec, Jean-Yves, 22560 Trebeurden (FR); Houdoin, Thierry, 22560 Pleumeur Bodou (FR)
(74) Mandataire: Maillet, Alain

(56) Documents cités:
- WO-A-98/43399
- WO-A-99/33313

## Description

La présente invention concerne une unité de commutation d'un réseau de transmission par paquets destinée à commuter des paquets d'une connexion présents sur une entrée d'un de ses ports vers au moins une sortie d'un de ses ports, lesdits paquets, dits paquets de couche supérieure, étant transportés par des paquets de couche inférieure. Un commutateur représentant l'état de l'art le plus proche est décrit dans le document WO 98/4 3399.

Dans la présente description et les revendications annexées, on entend par le terme "couche", les couches de protocole telles qu'elles sont par exemple définies dans le modèle OSI ou tout autre modèle et qui concernent chacune un ensemble de fonctions mis en oeuvre sur des unités de données de couches inférieure ou supérieure.

Dans la présente invention, on se réfère à deux couches dont l'une est supérieure par rapport à l'autre du fait qu'elle y apporte un ensemble de fonctions supplémentaires, comme par exemple le routage. Dans un exemple d'application particulière de l'invention, les paquets qui appartiennent à la couche supérieure sont des paquets tels que spécifiés dans le protocole AAL2, alors que les paquets de la couche inférieure sont des cellules ATM. On comprendra que la présente invention ne se limite cependant pas à cette application particulière.

On va décrire le protocole AAL2. Le transport d'informations conforme au protocole AAL2 (Recommandations I363.2, I366.1 et 1366.2 de l'UTT) et la mise en oeuvre de la signalisation qui y est associée (Recommandation Q.2630.2 de l'IUT) sont recommandés ou envisagés dans différents réseaux de communication dont le plus connu actuellement est le réseau d'accès pour mobiles de 3^{ème} génération baptisé UTRAN (UMTS Terrestrial Radio Access Network). L'utilisation de ce protocole AAL2 sur un réseau d'accès de type à cellules ATM a été définitivement adoptée par l'organisme de normalisation 3GPP pour la version de 1999 (R99) de l'UTRAN, cette version étant appelée aujourd'hui R3. La présente invention trouve donc notamment application dans les architectures de contrôleur de réseau de mobiles RNC et dans les stations de base dites node B d'un réseau d'accès UTRAN, mais également dans les concentrateurs/commutateurs effectuant la commutation AAL2.

D'autres domaines d'application peuvent également être envisagés, comme par exemple le transport de la voix sur ADSL ou le raccordement de commutateurs privés PABX à travers un réseau de transport ATM en utilisant la fonction de "trunking" définie dans la sous-couche SSCS définie dans la recommandation I366.2 de l'IUT.

On rappelle ci-dessous les principes qui gouvernent le protocole de transport dit AAL2 décrit dans les trois recommandations de l'IUT mentionnées ci-dessus. Ce protocole de transport a été défini pour contourner le problème du temps d'assemblage d'une cellule ATM qui devient critique pour les bas débits. En effet, à 16 kbit/s et pour un remplissage complet de la cellule ATM, ce temps d'assemblage est de 24 ms. La solution qui a été retenue consiste à multiplexer les flux de plusieurs communications dans un même canal ATM en faisant appel à une structuration des informations en paquets, appelées par la suite paquets AAL2. Ce mode de transport constitue la partie basse du protocole nommée sous-couche CPS (Common Part Sublayer). Les indispensables fonctions d'adaptation se situent au-dessus de la sous-couche CPS dans des sous-couches nommées SSCS (Service Specific Convergence Sublayer). La première de ces sous-couches, la sous-couche SSCS de segmentation est décrite dans la recommandation I366.1 de l'UIT et est destinée au transport d'unités de données comportant un nombre d'octets important. La seconde, la sous-couche SSCS de trunking pour le temps réel est décrite dans la recommandation I366.2 de l'UIT.

Une séquence de paquets AAL2 est garantie sur chaque canal AAL2, mais le service fourni par la sous-couche CPS est de type non-assuré, c'est-à-dire que les paquets manquants (par exemple suite à des pertes de cellules ATM les transportant) ne sont pas remplacés par retransmission à ce niveau,

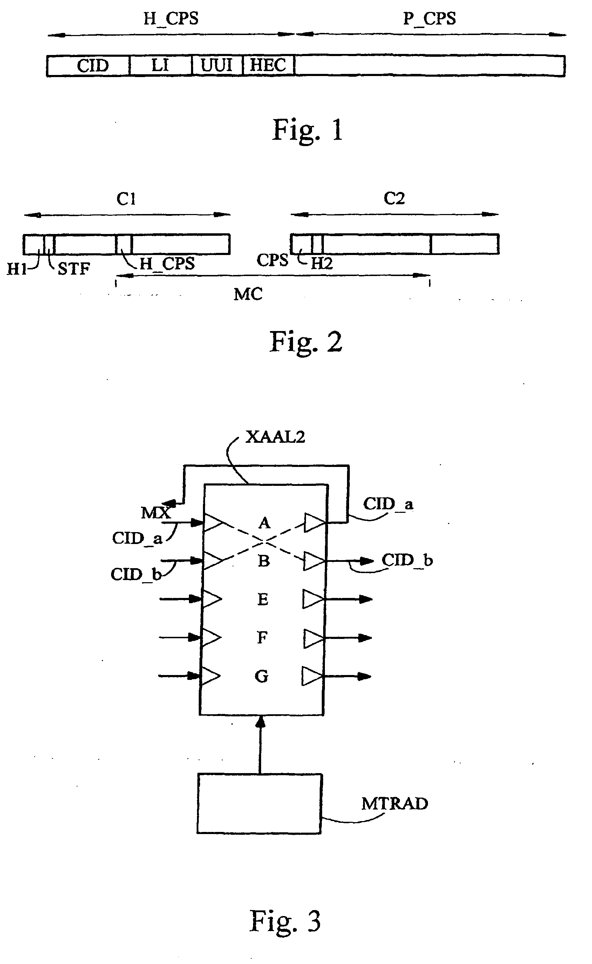

On a représenté à la Fig. 1 le format des paquets AAL2 de la couche CPS du protocole AAL2 tel qu'il est spécifié dans la recommandation I363.2. de l'IUT. Les paquets AAL2 ont un en-tête H_CPS de trois octets et une partie utile P_CPS de longueur variable contenant l'information usager. Par défaut, cette longueur est limitée à 45 octets. Comme cela est visible à la Fig. 1, l'en-tête H_CPS comprend les champs suivants :
- un champ d'identification de connexion CID qui est un champ de 8 bits et qui permet d'identifier la connexion AAL2,
- un champ qui est un champ de 6 bits et qui code la longueur LI de la partie utile du paquet de telle manière que LI+ 1 soit égale au nombre d'octets,
- un champ d'informations d'utilisateur à utilisateur UUI de 5 bits,
- un champ HEC qui est un champ de 5 bits pour la protection contre les erreurs d'en-tête.

Les paquets AAL2 ont une longueur quelconque. Ils ne sont en général pas cadrés dans les cellules ATM les transportant. La technique de recouvrement (overlapping) assure le remplissage dans ces cellules. Ainsi, un paquet dont le début est rangé en fin d'une cellule (n) peut déborder sur la cellule suivante (n+1). Ainsi, à la Fig. 2, on montre deux cellules ATM C1 et C2 lesquelles contiennent un paquet AAL2 noté MC. Le premier octet qui suit l'en-tête H1 de la cellule C1 est appelé "champ de démarrage", ou "Start Field" (en abrégé STF) et contient essentiellement un pointeur de 6 bits appelé aussi "champ décalé" (en abrégé OSF) qui code le nombre d'octets séparant ce champ du prochain paquet CPS (ici le paquet MC) ou, dans le cas général, du prochain champ vide. Une valeur nulle indique que le paquet AAL2 suit immédiatement l'octet STF. La valeur maximum portée par le pointeur OSF est de 47, ce qui indique que la cellule ATM ne contient aucune donnée. La gestion de ce pointeur permet de transporter de manière sécurisée un nombre quelconque de paquets dans les cellules ATM successives d'un même circuit virtuel. Le rendement des liaisons mesuré en taux de remplissage est ainsi optimal. Un bit de numéro de séquence (SN) et un bit de parité sont également constitutifs de l'octet STF.

Les équipements qui composent un réseau de télécommunication gèrent des terminaisons et ce, tant au niveau réception qu'au niveau émission. Une terminaison est bidirectionnelle et comprend donc un module de terminaison de réception et un module de terminaison d'émission. Il en est ainsi, par exemple dans un réseau d'accès à des mobiles tel qu'un réseau UTRAN tel que décrit ci-dessus, du contrôleur de réseau RNC ou de chaque station de base dite Node B. Il en est également ainsi du commutateur XAAL2 représenté à la Fig. 3 dont chaque port A, B, E, F, G comporte un module de terminaison de réception (triangle avec sommet tourné vers l'intérieur) et un module de terminaison d'émission (triangle avec sommet tourné vers l'extérieur).

Dans un réseau supportant le protocole AAL2, une terminaison AAL2 constitue l'extrémité d'un multiplex ATM (tel que celui donné à titre d'exemple qui est marqué MX à la Fig. 3) dans lequel un ou plusieurs circuits virtuels VC assurent le transport des connexions AAL2. On notera que ces circuits virtuels VC peuvent être caractérisés par des paramètres de trafic et de qualité de service dits ATC différents.

De manière générale, un module de terminaison de réception réalise l'extraction des paquets AAL2 à partir des cellules ATM. Un tel module de réception est appelé in-AAL2 dans la suite de la description. Plus précisément, les principales fonctions mises en oeuvre par un tel module de réception sont les suivantes :
- décodage de l'octet STF (start field) des paquets AAL2 contenus dans les cellules ATM entrantes, et détermination des pointeurs, contrôle du séquencement et gestion des erreurs,
- décodage des en-têtes des paquets AAL2 pointés par les pointeurs afin de déterminer l'identification de connexion CID, la longueur LI, le champ UUI, et le code d'erreur HEC,
- extraction et assemblage au niveau de la couche AAL2 ou au niveau de la trame radio.

Les formats des données en sortie du module de terminaison de réception dépendent de la nature du traitement qu'il effectue. Ce traitement peut être un traitement au niveau de la partie utile des paquets AAL2, par exemple la gestion des couches MAC/RLC dans le cas d'un contrôleur de réseau RNC. Il peut s'agir d'un traitement au niveau des sous-couches SSCS. Il peut encore s'agir d'une commutation de paquets et, dans ce cas, le traitement en question consiste en la traduction des en-têtes des cellules ATM et des paquets AAL2 concernés.

Un module de terminaison d'émission réalise quant à lui l'insertion et le multiplexage des paquets dans les parties utiles des cellules ATM. Un tel module est appelé out-AAL2 dans la suite de la présente description. Les fonctions mises en oeuvre sont les suivantes :
- les traitements des paquets AAL2 correspondant aux sous-couches SSCS si nécessaire,
- le codage de l'octet STF (start field), c'est-à-dire la détermination du pointeur et le contrôle du séquencement des cellules ATM,
- le codage des en-têtes des paquets AAL2 : détermination de identificateur de connexion CID, de la longueur LI et du code d'erreur HEC,
- la gestion d'un "Timer-CU" dont le rôle est de garantir un taux de remplissage optimal en tenant compte des contraintes de délais,
- l'insertion et le multiplexage des paquets AAL2 dans des cellules ATM, et
- l'émission des cellules ATM.

Le format des données en entrée dépend de l'interface interne.

Pour réaliser la commutation de paquets AAL2, on utilise un commutateur de circuits virtuels qui réalise, dans le plan usager, d'une part, les fonctions de terminaisons des couches AAL2/CPS telles que celles qui viennent d'être exposées et, d'autre part, les fonctions de traduction des identificateurs de circuits virtuels et de connexions et les fonctions d'aiguillage selon le modèle de protocole qui est maintenant décrit. On notera qu'un tel commutateur ne reconnaît que la sous-couche CPS de la couche AAL2 et qu'il est donc transparent aux contenus des parties utiles des paquets AAL2.

Les connexions AAL2 sont établies par un protocole de signalisation (généralement conforme à la recommandation Q2630.2 de ITUT) qui assure des fonctions de contrôle d'admission des appels (CAC) et permet la gestion de trafics. Les paramètres des connexions sont enregistrés dans une mémoire de traduction MTRAD qui est associée au commutateur (voir Fig. 3).

Une connexion AAL2 est constituée de deux demi-connexions, une montante et une descendante. Les débits sur chaque demi-connexion ne sont pas nécessairement les mêmes. Très schématiquement, la commutation de paquets AAL2 consiste à établir un lien entre deux demi-connexions AAL2 bidirectionnelles.

A la Fig. 3, on peut voir que la demi-connexion, dont la terminaison est le port physique A, est identifiée par l'identificateur CID_a et que la demi-connexion, dont la terminaison est le port B, est identifiée par identificateur CID_b. On peut constater que le commutateur XAAL2 établit un lien entre la demi-connexion CID_a arrivant sur le module de réception du port A et la demi-connexion CID_b repartant du module d'émission du port B. De même, il établit un lien entre la demi-connexion CID_b arrivant sur le module de réception du port B et la demi-connexion CID_a repartant du module d'émission du port A.

Les paramètres d'aiguillage des connexions AAL2 sont enregistrés dans la mémoire de traduction MTRAD qui est associée au commutateur XAAL2. Les connexions sont ici établies entre les multiplex de gauche et les multiplex de droite.

Un tel commutateur à cinq ports pourrait être un contrôleur de réseau dit RNC pour lequel les ports E, F et G seraient connectés à des liaisons Iub, le port A serait connecté à l'interface Iu, le port A à une interface Iur.

La table ci-dessous est une représentation schématique exemplative des paramètres d'aiguillage tels qu'ils sont stockés dans la mémoire de traduction MTRAD du commutateur. On n'a pas fait apparaître les caractéristiques de trafics ou de priorité. Pour chaque connexion (aussi bien dans le sens montant que dans le sens descendant), le commutateur XAAL2 établit les liens entre les ports mentionnés à gauche de la table et ceux correspondants à droite, et réciproquement et effectue la traduction, d'une part, des identificateurs de circuits virtuels, en l'occurrence l'identificateur de trajet virtuel VPI et l'identificateur de circuit virtuel VCI et, d'autre part, de l'identificateur de connexion CID.

| | **PORT** | **VPI** | **VCI** | **CID** | **PORT** | **VPI** | **VCI** | **CID** |
|---|---|---|---|---|---|---|---|---|
| Cx1 | A | 0 | 100 | 10 | E | 0 | 100 | 15 |
| Cx2 | A | 0 | 100 | 20 | G | 0 | 200 | 30 |
| Cx3 | A | 0 | 110 | 10 | F | 0 | 150 | 10 |
| Cx4 | A | 0 | 110 | 30 | E | 0 | 100 | 20 |
| Cx5 | B | 0 | 100 | 15 | E | 0 | 100 | 30 |
| Cx6 | B | 0 | 100 | 20 | F | 0 | 150 | 25 |

Si l'on considère, à titre d'exemple, la connexion cx2, l'interprétation de la table quant au fonctionnement du commutateur XAAL2 est la suivante. Les paquets AAL2 transportés par le circuit virtuel VC (0,100), identifiés par identificateur de connexion CID = 20 et reçus sur le port A sont aiguillés vers le port G dans le circuit virtuel VC (0,200) avec l'identificateur de connexion CID = 30. Réciproquement les paquets transportés dans le circuit virtuel VC (0,200), identifiés par l'identificateur CID = 30 et reçus sur le port G sont aiguillés vers le port A dans le circuit virtuel VC (0,100) avec l'identificateur CID = 20.

L'interprétation des autres exemples tirés de cette table est facilement extrapolable de celle qui vient d'être donnée ci-dessus.

Ainsi, on peut constater que ce traitement particulier met en oeuvre, d'une part, des fonctions d'aiguillage d'un port vers un autre port du commutateur et, d'autre part, des fonctions de traduction des identificateurs de circuits virtuels (VPI,VCI) des cellules ATM qui transportent lesdits paquets AAL2 et des identificateurs de connexion (CID) des paquets AAL2 eux-mêmes. Ainsi, la commutation de paquets AAL2 peut être fonctionnellement découpée en trois opérations :
1) réception des cellules ATM portant les paquets AAL2 (paquets de la sous-couche CPS AAL2) et extraction de ces derniers desdites cellules ATM,
2) traduction des identificateurs de circuits virtuels desdites cellules ATM et des identificateurs de connexion desdits paquets AAL2 extraits, puis aiguillage, dans le commutateur, desdits paquets AAL2 extraits vers le port de sortie désiré du commutateur, et, enfm,
3) insertion des paquets CPS AAL2 dans des cellules ATM et émission de celles-ci.

Le but de la présente invention est de proposer une architecture de commutateur qui permette d'effectuer la commutation de paquets AAL2 telle qu'elle vient d'être exposée. Il est plus exactement, dans un mode d'application particulière, d'effectuer une telle commutation de paquets AAL2 en utilisant un commutateur prévu à l'origine pour pouvoir effectuer la commutation de cellules ATM.

Il est, de manière générale, de proposer une unité de commutation d'un réseau de transmission par paquets destinée à commuter des paquets d'une connexion présents sur une entrée d'un de ses ports vers au moins une sortie désirée d'un de ses ports, lesdits paquets, dits paquets de couche supérieure, étant transportés par des paquets de couche inférieure.

Une unité de commutation d'un réseau de transmission par paquets selon la présente invention est caractérisée en ce qu'elle comprend :
au moins un module de terminaison de réception prévu pour extraire de paquets de couche inférieure présents sur son entrée, les paquets de couche supérieure qu'ils contiennent, pour insérer chaque paquet de couche supérieure ainsi extrait dans un unique paquet de couche inférieure, dit paquet intermédiaire, et délivrer ledit paquet intermédiaire,
au moins un module de terminaison d'émission pour extraire ledit paquet de couche supérieure dudit paquet intermédiaire, pour l'insérer, éventuellement avec d'autres paquets, dans un ou plusieurs paquets de couche inférieure et pour délivrer lesdits paquets de couche inférieure
un commutateur prévu pour pouvoir aiguiller lesdits paquets de couche inférieure présents sur une de ses entrées vers la sortie d'un de ses ports reliée à l'entrée d'un module de terminaison de réception, pour aiguiller les paquets intermédiaires émis par ledit ou chaque module de terminaison de réception vers la sortie d'un de ses ports reliée à l'entrée d'un module de terminaison d'émission et pour aiguiller les paquets émis de couche inférieure par ledit ou chaque module de terminaison d'émission vers la sortie désirée dudit port de ladite unité.

Dans un mode de réalisation avantageux, ladite unité de commutation comprend une module prévu pour effectuer un traitement particulier des paquets de couche supérieure, ledit module de traitement étant prévu pour recevoir les paquets intermédiaires émis par le module de terminaison de réception, pour traiter les paquets de couche supérieure que lesdits paquets intermédiaires comprennent et pour ré-émettre lesdits paquets intermédiaires dans lesquels sont insérés lesdits paquets de couche supérieure ainsi traités. Dans ce cas, ledit commutateur est par exemple prévu pour pouvoir aiguiller lesdits paquets de couche inférieure présents sur une de ses entrées vers la sortie d'un de ses ports reliée à l'entrée d'un module de terminaison de réception, pour aiguiller les paquets intermédiaires émis par ledit ou chaque module de terminaison de réception vers la sortie d'un de ses ports reliée à l'entrée de ladite unité de traitement, pour aiguiller les paquets intermédiaires ré-émis par ladite unité de traitement vers la sortie d'un de ses ports reliée à l'entrée d'un module de terminaison d'émission et pour aiguiller les paquets de couche inférieure émis par ledit ou chaque module de terminaison d'émission vers la sortie désirée dudit port de ladite unité.

Selon une autre caractéristique de la présente invention, ledit commutateur est prévu pour aiguiller les paquets de couche inférieure qui ne contiendraient pas de paquets de couche supérieure directement vers la sortie désirée de ladite unité de commutation.

Selon une autre caractéristique de l'invention, lesdits paquets de couche supérieure sont pourvus d'un en-tête dans lequel se trouve un identificateur de connexion, ledit ou chaque module de terminaison de réception effectuant les traductions d'identificateur de connexion nécessaires à la commutation.

Selon une autre caractéristique de l'invention, lesdits paquets de couche supérieure sont pourvus d'un en-tête dans lequel se trouve un identificateur de connexion, ledit ou chaque module de terminaison d'émission effectuant les traductions d'identificateur de connexion nécessaires à la commutation.

Selon une autre caractéristique de l'invention, lesdits paquets de couche inférieure sont pourvus d'un en-tête dans lequel se trouve un identificateur de circuit, ledit ou chaque module de terminaison de réception ou d'émission effectuant les traductions d'identificateur de connexion nécessaires à la commutation.

Selon une autre caractéristique de l'invention, ladite unité de commutation comprend une unité de signalisation destinée à traiter les paquets de signalisation correspondant au protocole des paquets de couche supérieure et prévue pour commander des mémoires de traduction d'identificateurs que comportent ledit commutateur, ledit module de terminaison de réception et/ou ledit module de terminaison d'émission.

Selon une autre caractéristique de l'invention, elle comportent plusieurs modules de terminaison de réception et plusieurs modules de terminaison d'émission, lesdits modules étant dédiés à des connexions et/ou des circuits virtuels particuliers.

Selon une autre caractéristique de l'invention, elle comportent au moins une paire de modules de terminaison de réception et au moins une paire de modules de terminaison d'émission, chaque module de chaque paire étant affecté à un sens montant ou descendant particulier des connexions.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un diagramme qui illustre le format d'un paquet de la couche AAL2/CPS,
La Fig. 2 est un diagramme qui illustre quant à lui l'insertion d'un paquet AAL2 dans deux cellules ATM,
La Fig. 3 est un schéma synoptique d'une unité de commutation de paquets AAL2,
La Fig. 4 est un schéma synoptique d'une unité de commutation de paquets AAL2 qui est conforme à un mode de réalisation particulier de la présente invention,
La Fig. 5 est un schéma synoptique d'une unité de commutation de paquets AAL2 qui est conforme à un autre mode de réalisation particulier de la présente invention, et
La Fig. 6 est un schéma synoptique d'une unité de commutation de paquets AAL2 qui est conforme au mode de réalisation particulier déjà représenté à la Fig. 4, mais cette fois-ci d'un point de vue de la signalisation.

Le principe de la présente invention consiste à ranger chaque paquet de couche supérieure préalablement extrait des paquets de couche inférieure présents à l'entrée d'un port dans un unique paquet de couche inférieure, dit paquet intermédiaire, à réaliser l'aiguillage dudit paquet intermédiaire en relation avec les traitements à réaliser sur ledit paquet de couche supérieure correspondant, à extraire ensuite chaque paquet de couche supérieure de chaque paquet intermédiaire, à l'insérer dans des paquets de couche inférieure en les multiplexant dans ces derniers, puis à aiguiller lesdits paquets de couche inférieure vers la sortie du port voulu.

Plus particulièrement, dans une application particulière, les paquets de couche inférieure sont des cellules ATM, alors que les paquets de couche supérieure sont des paquets AAL2. Dans ce cas, la présente invention consiste à ranger dans une seule cellule ATM, dite cellule intermédiaire, chaque paquet extrait d'un ou de plusieurs paquets présents à l'entrée d'un port, et ce, au moyen d'un module de terminaison de réception (in-AAL2), à réaliser l'aiguillage dudit paquet intermédiaire en relation avec le traitement à accomplir sur le paquet AAL2 qu'il contient, et ce, dans un commutateur ATM traditionnel, d'extraire ensuite chaque paquet de chaque cellule intermédiaire ATM, à insérer, au moyen de modules de terminaison d'émission (out-AAL2), chaque paquet AAL2 dans des cellules sortantes ATM en les multiplexant dans ces dernières, puis à aiguiller lesdites cellules ATM vers la sortie du port voulu.

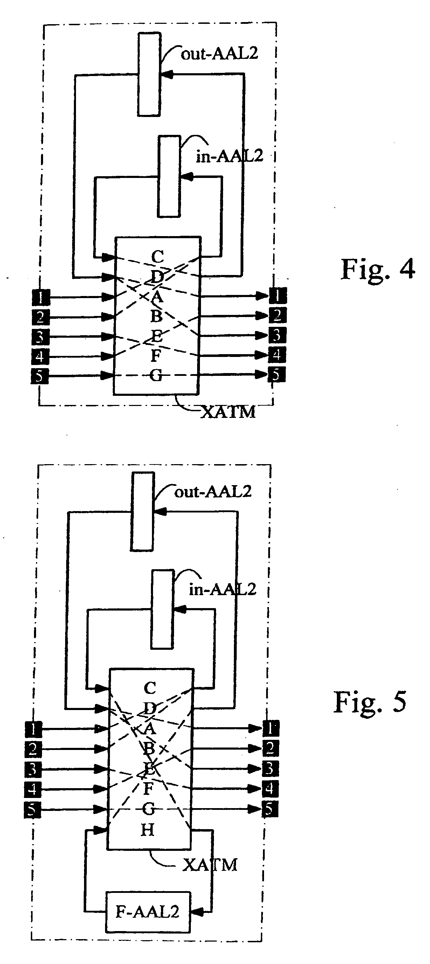

On a représenté à la Fig. 4 une unité de commutation 10 selon la présente invention. Elle est essentiellement constituée d'un commutateur XATM dont au moins un port (en l'occurrence un) a sa sortie qui est reliée à l'entrée d'un module de terminaison de réception in-AAL2 et son entrée reliée à la sortie dudit module de terminaison de réception in-AAL2 et dont au moins un autre port (en l'occurrence un) a sa sortie qui est reliée à l'entrée d'un module de terminaison d'émission out-AAL2 et son entrée reliée à la sortie dudit module de terminaison d'émission out-AAL2.

Ledit ou chaque module de réception in-AAL2 réalise les fonctions de réception normalisées (notamment réception et extraction des paquets AAL2 des cellules ATM) et d'émission (encapsulation de chaque paquet AAL2 dans une cellule ATM). Cependant, la procédure d'encapsulation est très simplifiée du fait qu'un seul paquet AAL2 n'est inséré dans la cellule intermédiaire et que, de ce fait, il peut ne pas exister de gestion d'octet STF ni de Timer CU. Dans la cellule ATM intermédiaire, l'octet STF est de plus inutile car le pointeur est toujours égal à 0. Le paquet contenu dans cette cellule est cadré sur le premier octet de la partie utile de cette cellule. L'absence de l'octet STF permet d'insérer un paquet de longueur égale à 45 octets (longueur maximum) dans une seule cellule ATM.

Ledit ou chaque module d'émission out-AAL2 réalise les fonctions de réception (réception et extraction du paquet AAL2 contenu dans chaque cellule intermédiaire, cette extraction étant très simplifiée du fait de la simplicité du processus d'encapsulation ci-dessus) et les fonctions d'émission (insertion des paquets AAL2 précédemment extraits dans des cellules ATM selon le protocole AAL2 rappelé ci-dessus et, enfin, émission desdites cellules ATM).

Le commutateur XATM réalise essentiellement les opérations d'aiguillage des cellules ATM quelles soient intermédiaires ou pas, ainsi que les fonctions de traduction des identificateurs de circuits virtuels de ces cellules ATM.

Quant aux traductions des identificateurs de connexion CID des paquets AAL2, elles sont effectuées dans les modules de réception in-AAL2 ou, avantageusement, dans les modules d'émission out-AAL2.

On notera que la traduction des identificateurs de circuits virtuels contenus dans les en-têtes des cellules ATM entrantes peut également être réalisée par les modules in-AAL2 ou, avantageusement par les modules out-AAL2 et par le commutateur XATM.

Le fonctionnement est le suivant. Les cellules ATM qui transportent des paquets AAL2 et qui sont présents sur au moins une des entrées 1 à 5 sont aiguillées sur la sortie du port C et donc sur l'entrée du module de réception in-AAL2. Cela est le cas des flux ATM présents sur les entrées 1 et 2, comme le montre les tirets.

Quant aux flux de cellules ATM présents sur les entrées 3, 4 et 5 qui eux ne portent pas de paquets AAL2, ils sont respectivement aiguillés directement sur les sorties 4, 2 et 5.

Dans le module de réception in-AAL2, chaque paquet AAL2 est extrait de la ou des cellules ATM où il était inséré et est encapsulé dans une unique cellule ATM, dite cellule intermédiaire. Cette cellule intermédiaire est alors émise sur l'entrée du port C du commutateur XATM où elle est aiguillée, par le commutateur XATM, sur la sortie du port D pour se retrouver à l'entrée du module d'émission out-AAL2.

Là, le paquet AAL2 que chaque cellule intermédiaire contient est extrait puis inséré dans un flux de cellules ATM destinées au port de sortie voulu. En l'occurrence, selon les connexions auxquelles appartiennent les paquets AAL2 concernés, le flux de cellules sur le port D est aiguillé, soit vers la sortie du port A pour se trouver sur la sortie 1 de l'unité de commutation, soit vers la sortie du port E pour se trouver sur la sortie 3 de l'unité de commutation.

Ainsi, pour réaliser la fonction de commutation AAL2, la solution présentée par la présente invention consiste à placer un commutateur ATM entre des modules de terminaison de réception in-AAL2 et des modules de terminaison d'émission out-AAL2.

Pour résumer, les avantages par rapport à un commutateur AAL2 tel que celui représenté à la Fig. 3 sont les suivants :
- Les traitements des fonctions d'extraction et d'insertion dans des modules de terminaison de réception et d'émission séparés améliorent les performances car les processus sont traités dans des "machines logicielles ou matérielles" séparées,
- Il est possible d'ajouter des modules de terminaison de réception et d'émission supplémentaires pour accroître les capacités de commutation et améliorer la sécurité de fonctionnement,
- Les fonctions d'aiguillage sont assurées dans un commutateur XATM de type ATM qui est un équipement aujourd'hui largement utilisé,
- Le fait d'utiliser un commutateur ATM classique permet de traiter toutes les fonctions développées dans ces types d'équipements, comme par exemple les fonctions de brassage des conduits virtuels VP, de commutation des circuits virtuels VC, etc. et de bénéficier de la gamme des accès physiques déjà existants : optiques, électriques à différents débits.

Pour résoudre le problème de surdébit entre les modules de terminaison de réception in-AAL2 et d'émission out-AAL2, plusieurs solutions sont possibles : faire en sorte que le débit binaire du multiplex de sortie soit supérieur à celui du multiplex d'entrée, multiplier le nombre de multiplex de sortie.

On notera que plusieurs modules de terminaison de réception in-AAL2 et plusieurs modules de terminaison d'émission out-AAL2 peuvent être placés en serveurs à l'instar de ceux montrés à la Fig. 4. De même, chaque module peut terminer une ou plusieurs liaisons AAL2. Les nombres de liaisons en entrée et en sortie d'un module peuvent être différents. La configuration choisie peut dépendre de contraintes liées au trafic AAL2 à commuter.

A la Fig. 5, on a représenté un mode de réalisation d'une unité de commutation selon la présente invention dans lequel un traitement particulier est effectué sur la partie utile des paquets AAL2. Ce traitement particulier est réalisé par un module noté F-AAL2. Ce traitement concerne par exemple des fonctions de terminaisons au-dessus de la sous-couche CPS, comme par exemple la gestion des sous-couches des protocoles radio MAC et RLC dans un contrôleur de réseau RNC, ou au niveau PDU pour un traitement dans les sous-couches SSCS.

On notera qu'une unité de commutation selon l'invention pourrait comporter plusieurs unités de traitement du type de celle notée F-AAL2 si plusieurs traitements en parallèle étaient à réaliser.

Dans le mode de réalisation représenté à la Fig. 5, le commutateur XATM comporte un port de plus que le commutateur XATM de la Fig. 4. La sortie de ce port H est reliée à l'entrée du module de traitement F-AAL2, alors que son entrée reçoit la sortie du module F-AAL2.

Le fonctionnement diffère de celui du mode de réalisation représenté à la Fig. 4 en ce que la cellule intermédiaire délivrée par le module de réception in-AAL2 et présente sur l'entrée du port C du commutateur XATM est aiguillée par le commutateur XATM vers la sortie du port H et par conséquent, vers le module de traitement F-AAL2 pour y subir ledit traitement escompté. Les cellules ATM émises en sortie de ce module F-AAL2 sont aiguillées de l'entrée du port H vers la sortie du port D du commutateur XATM et par conséquent, vers l'entrée du module d'émission out-AAL2.

On notera que, dans le cas où l'unité de commutation comporterait plusieurs unités de traitement telles que l'unité F-AAL2, les cellules ATM intermédiaires émises par le module de réception in-AAL2 seraient alors aiguillées vers l'une ou l'autre de ces unités de traitement selon des critères liés par exemple aux caractéristiques desdites cellules ATM (appartenance à tel ou tel circuit virtuel VPI) ou aux caractéristiques des paquets qu'elles contiennent (CID, etc.)

On notera encore que l'aiguillage dans le commutateur XATM peut être prévu de manière que les paquets AAL2 ne subissent pas le traitement normalement opéré par le ou les modules F-AAL2. Dans ce cas, la cellule intermédiaire délivrée par le module de réception in-AAL2 et présente sur l'entrée du port C du commutateur XATM est directement aiguillée par le commutateur XATM vers la sortie du port D du commutateur XATM et par conséquent, vers l'entrée du module d'émission out-AAL2.

Les processus de commutation à effectuer sont décrits dans la table de traduction MTRAD (non représentée par souci de lisibilité de la Fig. 5) qui est associée au commutateur XATM. Cette table fera la distinction entre les circuits virtuels VC transportant des paquets à commuter, les circuits virtuels VC transportant des paquets à traiter dans le module F-AAL2, les circuits virtuels VC transportant des messages de signalisation sur AAL5, les circuits virtuels VC à brasser, etc.

On considère maintenant, à titre d'exemple, une unité de commutation telle que celle qui est représentée à la Fig. 4 et qui ne possède donc qu'un seul module de terminaison de réception in-AAL2 et un seul module outAAL2. Chacun de ces modules ne présente en outre qu'une seule entrée et qu'une seule sortie.

On notera qu'une connexion permanente est établie dans le commutateur XATM entre le module de réception in-AAL2 et le module d'émission out-AAL2. Cette connexion doit être transparente à tous les circuits virtuels VC qui peuvent supporter des connexions AAL2. Le module de réception in-AAL2 est transparent quant à identificateur de connexion CID des paquets AAL2. Il réalise les fonctions d'extraction standard et une fonction d'insertion simplifiée (pas d'octet STF et un seul paquet AAL2 par cellule). Quant au module d'émission out-AAL2, il effectue des fonctions de traduction d'identificateur de circuits virtuels VPI/VCI et d'identificateur de connexion CID. Il réalise de plus les fonctions d'insertion standard et une fonction d'extraction simplifiée. Il ne réalise pas d'aiguillage.

Dans le tableau ci-dessous, on a représenté un exemple d'affectation des connexions aux ports de l'unité de commutation et du commutateur XATM.

| Port de l'unité de commutation | Port du commutateur XATM | Connexion |
|---|---|---|
| 1 | A | Cx1, Cx2, Cx3, Cx4 |
| 2 | B | Cx5, Cx6 |
| 3 | E | Cx1, Cx4, Cx5 |
| 4 | F | Cx3, Cx6 |
| 5 | G | Cx2 |

Un exemple de programmation de la table de traduction du commutateur XATM est indiqué ci-dessous.

| Entrées | | | Sorties | | |
|---|---|---|---|---|---|
| Port | VPI | VCI | Port | VPI | VCI |
| A | 0 | 100 | C | 0 | 100 |
| A | 0 | 110 | C | 0 | 101 1 |
| B | 0 | 100 | C | 0 | 102 |
| E | 0 | 100 | C | 0 | 200 |
| F | 0 | 150 | C | 0 | 201 |
| G | 0 | 200 | C | 0 | 202 |
| D | 0 | 100 | E | 0 | 100 |
| D | 0 | 101 | F | 0 | 150 |
| D | 0 | 102 | G | 0 | 200 |
| D | 0 | 200 | A | 0 | 100 |
| D | 0 | 201 | A | 0 | 110 |
| D | 0 | 202 | B | 0 | 100 |
| C | 0 | 0 à 255 | D | 0 | 0 à 255 |

La programmation de la table de traduction du module d'émission out-AAL2 est représentée ci-dessous. Chaque ligne correspond à une connexion AAL2. On notera que le fait de trouver 2 fois chaque connexion s'explique par le fait que le module est utilisé pour les 2 sens de la connexion.

| | Entrées | | Sorties | |
|---|---|---|---|---|
| | **VCI** | **CID** | **VCI** | **CID** |
| Cx1 | 100 | 10 | 100 | 15 |
| Cx2 | 100 | 20 | 102 | 30 |
| Cx3 | 101 | 10 | 101 | 10 |
| Cx4 | 101 | 30 | 100 | 20 |
| Cx5 | 102 | 15 | 100 | 30 |
| Cx6 | 102 | 20 | 101 | 25 |
| Cx1 | 200 | 15 | 200 | 10 |
| Cx2 | 202 | 30 | 200 | 20 |
| Cx3 | 201 | 30 | 201 | 10 |
| Cx4 | 200 | 20 | 201 | 30 |
| Cx5 | 200 | 10 | 202 | 15 |
| Cx6 | 201 | 25 | 202 | 20 |

A titre d'exemple, on décrit ci-dessous la connexion cx4 dans le sens A vers E.
Sur le multiplex A : VC 110, CID 30 (cx4 partage le VC 110 avec cx3),
Sur le lien a) : le VC 110 a été traduit en VC 101,
Sur les liens b) et c) : les paquets de CID 30 sont seuls dans le VC 101,
Sur le lien d) : le CID 30 est traduit en CID20, le VC 101 est traduit en 100,
Sur le multiplex E : VC 100, CID 20 (cx4 partage le VC 100 avec cx1 et cx5).

Dans le sens E vers A, cela donnerait.
Sur le multiplex E : VC 100, CID 20 (cx4 partage le VC 100 avec cx1 et cx5).
Sur le lien a) : le VC 100 a été traduit en VC 200.
Sur les liens b) et c) : les paquets sont seuls dans le VC 200.
Sur le lien d) : le CID 20 est traduit en CID30, le VC 200 est traduit en 201.
Sur le multiplex A : VC 110, CID 30 (cx4 partage le VC avec cx3).

Globalement, la commutation peut être visualisée par le tableau ci-dessous :

| | ENTREES OU SORTIES | | | | SORTIES OU ENTREES | | | |
|---|---|---|---|---|---|---|---|---|
| | Port | VPI | VCI | CID | Port | VPI | VCI | CID |
| Cx1 | A | 0 | 100 | 10 | E | 0 | 100 | 15 |
| Cx2 | A | 0 | 100 | 20 | G | 0 | 200 | 30 |
| Cx3 | A | 0 | 110 | 10 | F | 0 | 150 | 10 |
| Cx4 | A | 0 | 110 | 30 | E | 0 | 100 | 20 |
| Cx5 | B | 0 | 100 | 15 | E | 0 | 100 | 30 |
| Cx6 | B | 0 | 100 | 20 | F | 0 | 150 | 25 |

Les modes de réalisation d'une unité de commutation décrits ci-dessus ne mettaient en oeuvre que des modules de réception in-AAL2 et d'émission out-AAL2 à une seule entrée et une seule sortie. Néanmoins, afin d'accroître la capacité en trafics lorsque l'équipement présente de nombreux multiplex dont les taux de charge en trafic AAL2 sont élevés, il peut être avantageux qu'ils disposent de plusieurs entrées et sorties. Il peut en être de même pour séparer les types de trafics en fonction de différents critères (par exemple, leur nature : temps réel ou non temps réel, leur sens : montant et descendant, le traitement que vont subir leurs paquets : commutation ou terminaison ou une combinaison de ces critères.

De même, afin d'améliorer les performances de l'équipement, il est possible d'utiliser plusieurs modules de réception in-AAL2 et d'émission out-AAL2 placés également en serveur. Les résultats obtenus sont tout à fait semblables à ceux décrits dans le paragraphe précédent. On peut y ajouter la sécurité dans la mesure où l'équipement va pouvoir résister à la défaillance de modules AAL2.

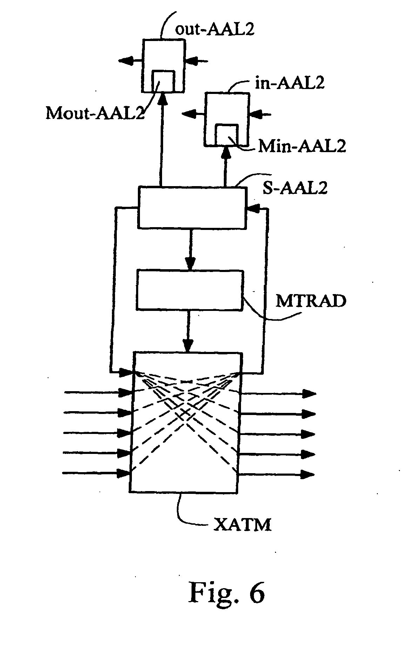

A la Fig. 6, on a représenté une unité de commutation du seul point de vue de la signalisation. Outre le commutateur XATM et les modules de terminaison de réception in-AAL2 et d'émission out-AAL2, elle comporte une unité de signalisation S-AAL2 prévue pour traiter les fonctions de contrôle AAL2 telles qu'elles sont normalisées par la recommandation I2630 de l'UIT. Cette unité de signalisation S-AAL2 est interfacée, d'une part, aux modules de terminaison de réception in-AAL2 et d'émission out-AAL2 et, d'autre part, à la mémoire de traduction MTRAD du commutateur XATM. Cette unité de signalisation S-AAL2 permet la mise à jour des tables de traduction MTRAD, Min-AAL2 et Mout-AAL2 qui sont respectivement présentes dans le commutateur XATM et dans les modules de terminaison in-AAL2 et out-AAL2. Comme on peut le constater à la Fig. 6, les liaisons virtuelles de signalisation concernant des connexions AAL2 venant des multiplex entrants sont toutes aiguillées vers l'unité de signalisation S-AAL2. Les messages sortants de cette unité effectuent les chemins inverses.

La gestion appel par appel des connexions ATM s'effectue dans le commutateur XATM dans une fonction de contrôle qui traite le protocole de signalisation normalisé. Les connexions permanentes sont également établies classiquement par l'administrateur de réseau. La table de traduction du commutateur ATM doit également être mise à jour à chaque établissement ou libération de connexions AAL2.

Outre les avantages déjà exprimés ci-dessus, la présente invention présente des avantages qui sont liés à une architecture avec serveurs. Les équipements serveurs sont installés et mis en service en fonction des besoins en trafic AAL2. Un déploiement peut être progressif. L'équipement développé assure à la fois des fonctions de terminaisons AAL2 et des fonctions de commutation AAL2. L'existence de modules dédiés, certains aux fonctions de réception AAL2, les autres aux fonctions d'émission AAL2 permet d'améliorer les performances.

## Revendications

1. Unité de commutation d'un réseau de transmission par paquets destinée à commuter des paquets d'une connexion présents sur une entrée d'un de ses ports vers au moins une sortie désirée d'un de ses ports, lesdits paquets, dits paquets de couche supérieure, étant transportés par des paquets de couche inférieure, **caractérisée en ce qu'**elle comprend :
au moins un module de terminaison de réception prévu pour extraire de paquets de couche inférieure présents sur son entrée, les paquets de couche supérieure qu'ils contiennent, pour insérer chaque paquet de couche supérieure ainsi extrait dans un unique paquet de couche inférieure, dit paquet intermédiaire, et délivrer ledit paquet intermédiaire,
au moins un module de terminaison d'émission pour extraire ledit paquet de couche supérieure dudit paquet intermédiaire, pour l'insérer, éventuellement avec d'autres paquets, dans un ou plusieurs paquets de couche inférieure et pour délivrer lesdits paquets de couche inférieure
un commutateur prévu pour pouvoir aiguiller lesdits paquets de couche inférieure présents sur une de ses entrées vers la sortie d'un de ses ports reliée à l'entrée d'un module de terminaison de réception, pour aiguiller les paquets intermédiaires émis par ledit ou chaque module de terminaison de réception vers la sortie d'un de ses ports reliée à l'entrée d'un module de terminaison d'émission et pour aiguiller les paquets de couche inférieure émis par ledit ou chaque module de terminaison d'émission vers la sortie désirée dudit port de ladite unité.

2. Unité de commutation selon la revendication 1, **caractérisée en ce qu'**elle comprend une module prévu pour effectuer un traitement particulier des paquets de couche supérieure, ledit module de traitement étant prévu pour recevoir les paquets intermédiaires émis par le module de terminaison de réception, pour traiter les paquets de couche supérieure que lesdits paquets intermédiaires comprennent et pour ré-émettre lesdits paquets intermédiaires dans lesquels sont insérés lesdits paquets de couche supérieure ainsi traités.

3. Unité de commutation selon la revendication 2, **caractérisée en ce que** ledit commutateur est prévu pour pouvoir aiguiller lesdits paquets de couche inférieure présents sur une de ses entrées vers la sortie d'un de ses ports reliée à l'entrée d'un module de terminaison de réception, pour aiguiller les paquets intermédiaires émis par ledit ou chaque module de terminaison de réception vers la sortie d'un de ses ports reliée à l'entrée de ladite unité de traitement, pour aiguiller les paquets intermédiaires ré-émis par ladite unité de traitement vers la sortie d'un de ses ports reliée à l'entrée d'un module de terminaison d'émission et pour aiguiller les paquets de couche inférieure émis par ledit ou chaque module de terminaison d'émission vers la sortie désirée dudit port de ladite unité.

4. Unité de commutation selon une des revendications précédentes, **caractérisée en ce que** ledit commutateur est prévu pour aiguiller les paquets de couche inférieure qui ne contiendraient pas de paquets de couche supérieure directement vers la sortie désirée de ladite unité de commutation.

5. Unité de commutation selon une des revendications précédentes, **caractérisée en ce que** lesdits paquets de couche supérieure sont pourvus d'un en-tête dans lequel se trouve un identificateur de connexion, ledit ou chaque module de terminaison de réception effectuant les traductions d'identificateur de connexion nécessaires à la commutation.

6. Unité de commutation selon une des revendications 1 à 5, **caractérisée en ce que** lesdits paquets de couche supérieure sont pourvus d'un en-tête dans lequel se trouve un identificateur de connexion, ledit ou chaque module de terminaison d'émission effectuant les traductions d'identificateur de connexion nécessaires à la commutation.

7. Unité de commutation selon une des revendications précédentes, **caractérisée en ce que** lesdits paquets de couche inférieure sont pourvus d'un en-tête dans lequel se trouve un identificateur de circuit, ledit ou chaque module de terminaison de réception ou d'émission effectuant les traductions d'identificateur de circuit nécessaires à la commutation.

8. Unité de commutation selon une des revendications précédentes, **caractérisée en ce qu'**elle comprend une unité de signalisation destinée à traiter les paquets de signalisation correspondant au protocole des paquets de couche supérieure et prévue pour commander des mémoires de traduction d'identificateurs que comportent ledit commutateur, ledit module de terminaison de réception et/ou ledit module de terminaison d'émission.

9. Unité de commutation selon la revendication 8, **caractérisée en ce que** ledit commutateur est prévu pour pouvoir aiguiller lesdits paquets de signalisation présents sur une de ses entrées vers la sortie d'un de ses ports reliée à l'entrée de ladite unité de signalisation, pour aiguiller les paquets de signalisation délivrée par ladite unité de signalisation vers la sortie désirée dudit port de ladite unité.

10. Unité de commutation selon une des revendications précédentes, **caractérisée en ce qu'**elle comportent plusieurs modules de terminaison de réception et plusieurs modules de terminaison d'émission, lesdits modules étant dédiés à des connexions et/ou des circuits virtuels particuliers.

11. Unité de commutation selon la revendication 10, **caractérisée en ce qu'**elle comportent au moins une paire de modules de terminaison de réception et au moins une paire de modules de terminaison d'émission, chaque module de chaque paire étant affecté à un sens montant ou descendant particulier des connexions.

12. Unité de commutation selon une des revendications précédentes, **caractérisée en ce que** les paquets de couche inférieure sont des cellules ATM.

13. Unité de commutation selon une des revendications précédentes, **caractérisée en ce que** les paquets de couche supérieure sont des paquets AAL2.

## Claims

1. Switching unit of a packet data network intended to switch packets of a connection present at an input of one of its ports to at least one desired output of one of its ports, said packets, called upper layer packets, being transported by lower layer packets, **characterized in that** it comprises:
at least one receive termination module designed to extract, from lower layer packets present at its input, the upper layer packets that they contain, to insert each duly extracted upper layer packet into a single lower layer packet, called intermediate packet, and to deliver said intermediate packet,
at least one transmit termination module to extract said upper layer packet from said intermediate packet, to insert it, possibly with other packets, into one or more lower layer packets and to deliver said lower layer packets,
a switch designed to be able to switch said lower layer packets present at one of its inputs to the output of one of its ports linked to the input of a receive termination module, to switch the intermediate packets sent by said or each receive termination module to the output of one of its ports linked to the input of a transmit termination module and to switch the lower layer packets sent by said or each transmit termination module to the desired output of said port of said unit.

2. Switching unit according to Claim 1, **characterized in that** it comprises a module designed to perform a particular processing on the upper layer packets, said processing module being designed to receive the intermediate packets sent by the receive termination module, to process the upper layer packets that said intermediate packets contain and to resend said intermediate packets in which are inserted said duly processed upper layer packets.

3. Switching unit according to Claim 2, **characterized in that** said switch is designed to be able to switch said lower layer packets present at one of its inputs to the output of one of its ports linked to the input of a receive termination module, to switch the intermediate packets sent by said or each receive termination module to the output of one of its ports linked to the input of said processing unit, to switch the intermediate packets resent by said processing unit to the output of one of its ports linked to the input of a transmit termination module and to switch the lower layer packets sent by said or each transmit termination module to the desired output of said port of said unit.

4. Switching unit according to one of the preceding claims, **characterized in that** said switch is designed to switch the lower layer packets that do not contain upper layer packets directly to the desired output of said switching unit.

5. Switching unit according to one of the preceding claims, **characterized in that** said upper layer packets are provided with a header containing a connection identifier, said or each receive termination module performing the connection identifier translations required for switching.

6. Switching unit according to one of Claims 1 to 5, **characterized in that** said upper layer packets are provided with a header containing a connection identifier, said or each transmit termination module performing the connection identifier translations required for switching.

7. Switching unit according to one of the preceding claims, **characterized in that** said lower layer packets are provided with a header containing a circuit identifier, said or each receive or transmit termination module performing the circuit identifier translations required for switching.

8. Switching unit according to one of the preceding claims, **characterized in that** it comprises a signalling unit designed to process the signalling packets corresponding to the upper layer packet protocol and designed to control identifier translation memories that are included in said switch, said receive termination module and/or said transmit termination module.

9. Switching unit according to Claim 8, **characterized in that** said switch is designed to be able to switch said signalling packets present at one of its inputs to the output of one of its ports linked to the input of said signalling unit, to switch the signalling packets delivered by said signalling unit to the desired output of said port of said unit.

10. Switching unit according to one of the preceding claims, **characterized in that** it comprises a number of receive termination modules and a number of transmit termination modules, said modules being dedicated to particular connections and/or virtual circuits.

11. Switching unit according to Claim 10,
**characterized in that** it comprises at least one pair of receive termination modules and at least one pair of transmit termination modules, each module of each pair being assigned to a particular uplink or downlink direction of the connections.

12. Switching unit according to one of the preceding claims, **characterized in that** the lower layer packets are ATM cells.

13. Switching unit according to one of the preceding claims, **characterized in that** the upper layer packets are AAL2 packets.

## Patentansprüche

1. Schalteinheit eines Paketübertragungsnetzes, die dazu bestimmt ist, Pakete einer Verbindung, die an einem Eingang eines ihrer Ports vorhanden sind, zu mindestens einem gewünschten Ausgang eines ihrer Ports zu schalten, wobei die Pakete, Pakete höherer Schicht genannt, von Paketen tieferer Schicht befördert werden, **dadurch gekennzeichnet, dass** sie aufweist:
mindestens einen Empfangsanschlussmodul, der vorgesehen ist, um aus an seinem Eingang vorhandenen Paketen tieferer Schicht die in ihnen enthaltenen Pakete höherer Schicht zu entnehmen, um jedes so entnommene Paket höherer Schicht in ein einziges Paket tieferer Schicht, Zwischenpaket genannt, einzufügen und das Zwischenpaket zu liefern,
mindestens einen Sendeanschlussmodul, um das Paket höherer Schicht aus dem Zwischenpaket zu entnehmen, um es ggf. mit anderen Paketen in ein oder mehrere Pakete tieferer Schicht einzufügen und um die Pakete tieferer Schicht zu liefern,
einen Schalter, der vorgesehen ist, um die an einem seiner Eingänge vorhandenen Pakete tieferer Schicht zu dem Ausgang eines seiner Ports lenken zu können, der mit dem Eingang eines Empfangsanschlussmoduls verbunden ist, um die von dem oder jedem Empfangsanschlussmodul gesendeten Zwischenpakete zu dem Ausgang eines seiner Ports zu lenken, der mit dem Eingang eines Sendeanschlussmoduls verbunden ist, und um die Pakete tieferer Schicht, die von dem oder jedem Sendeanschlussmodul gesendet werden, zum gewünschten Ausgang des Ports der Einheit zu lenken.

2. Schalteinheit nach Anspruch 1, **dadurch gekennzeichnet, dass** sie einen Modul aufweist, der vorgesehen ist, um eine besondere Verarbeitung der Pakete höherer Schicht durchzuführen, wobei der Verarbeitungsmodul vorgesehen ist, um die vom Empfangsanschlussmodul gesendeten Zwischenpakete zu empfangen, um die in den Zwischenpaketen enthaltenen Pakete höherer Schicht zu verarbeiten und um die Zwischenpakete erneut zu senden, in die die so verarbeiteten Pakete höherer Schicht eingefügt sind.

3. Schalteinheit nach Anspruch 2, **dadurch gekennzeichnet, dass** der Schalter vorgesehen ist, um die Pakete tieferer Schicht, die an einem seiner Eingänge vorhanden sind, zu dem Ausgang eines seiner Ports lenken zu können, der mit dem Eingang eines Empfangsanschlussmoduls verbunden ist, um die von dem oder jedem Empfangsanschlussmodul gesendeten Zwischenpakete zu dem Ausgang eines seiner Ports zu lenken, der mit dem Eingang der Verarbeitungseinheit verbunden ist, um die von der Verarbeitungseinheit erneut gesendeten Zwischenpakete zu dem Ausgang eines seiner Ports zu lenken, der mit dem Eingang eines Sendeanschlussmoduls verbunden ist, und um die Pakete tieferer Schicht, die von dem oder jedem Sendeanschlussmodul gesendet werden, zum gewünschten Ausgang des Ports der Einheit zu lenken.

4. Schalteinheit nach einem der vorhergehenden Ansprüche, **dadurch gekennzeichnet, dass** der Schalter vorgesehen ist, um die Pakete tieferer Schicht, die keine Pakete höherer Schicht enthalten, direkt zum gewünschten Ausgang der Schalteinheit zu lenken.

5. Schalteinheit nach einem der vorhergehenden Ansprüche, **dadurch gekennzeichnet, dass** die Pakete höherer Schicht mit einem Vorspann versehen sind, in dem sich eine Verbindungskennung befindet, wobei der oder jeder Empfangsanschlussmodul die für die Umschaltung notwendigen Verbindungskennungsübersetzungen durchführt.

6. Schalteinheit nach einem der Ansprüche 1 bis 5, **dadurch gekennzeichnet, dass** die Pakete höherer Schicht mit einem Vorspann versehen sind, in dem sich eine Verbindungskennung befindet, wobei der oder jeder Sendeanschlussmodul die für die Umschaltung notwendigen Verbindungskennungs-übersetzungen durchführt.

7. Schalteinheit nach einem der vorhergehenden Ansprüche, **dadurch gekennzeichnet, dass** die Pakete tieferer Schicht mit einem Vorspann versehen sind, in dem sich eine Schaltungskennung befindet, wobei der oder jeder Empfangs- oder Sendeanschlussmodul die für die Umschaltung notwendigen Schaltungskennungsübersetzungen durchführt.

8. Schalteinheit nach einem der vorhergehenden Ansprüche, **dadurch gekennzeichnet, dass** sie eine Signalisierungseinheit aufweist, die dazu bestimmt ist, die Signalisierungspakete zu verarbeiten, die dem Protokoll der Pakete höherer Schicht entsprechen, und die vorgesehen ist, um Kennungsübersetzungsspeicher zu steuern, die der Schalter, der Sendeanschlussmodul und/oder der Empfangsanschlussmodul enthalten.

9. Schalteinheit nach Anspruch 8, **dadurch gekennzeichnet, dass** der Schalter vorgesehen ist, um die an einem seiner Eingänge vorhandenen Signalisierungspakete zu dem Ausgang eines seiner Ports lenken zu können, der mit dem Eingang der Signalisierungseinheit verbunden ist, um die von der Signalisierungseinheit gelieferten Signalisierungspakete zum gewünschten Ausgang des Ports der Einheit zu lenken.

10. Schalteinheit nach einem der vorhergehenden Ansprüche, **dadurch gekennzeichnet, dass** sie mehrere Empfangsanschlussmodule und mehrere Sendeanschlussmodule aufweist, wobei die Module auf bestimmte Verbindungen und/oder virtuelle Schaltungen zugeschnitten sind.

11. Schalteinheit nach Anspruch 10, **dadurch gekennzeichnet, dass** sie mindestens ein Paar von Empfangsanschlussmodulen und mindestens ein Paar von Sendeanschlussmodulen aufweist, wobei jeder Modul jedes Paars einer bestimmten Aufwärts- oder Abwärtsrichtung der Verbindungen zugeteilt ist.

12. Schalteinheit nach einem der vorhergehenden Ansprüche, **dadurch gekennzeichnet, dass** die Pakete tieferer Schicht ATM-Zellen sind.

13. Schalteinheit nach einem der vorhergehenden Ansprüche, **dadurch gekennzeichnet, dass** die Pakete höherer Schicht AAL2-Pakete sind.
